# EUROPÄISCHE PATENTSCHRIFT

(11) **EP 4 387 758 B1**
(45) Veröffentlichungstag und Bekanntmachung des Hinweises auf die Patenterteilung: **28.05.2025**
(21) Anmeldenummer: 22746986.3
(22) Anmeldetag: 06.07.2022
(51) Int. Cl.: B01D 61/18, B01D 63/02, C02F 3/12

(54) **MEMBRANFILTER UND VERFAHREN ZUM HERSTELLEN EINES MEMBRANFILTERS**
MEMBRANE FILTER AND METHOD FOR PRODUCING A MEMBRANE FILTER
FILTRE À MEMBRANE ET PROCÉDÉ DE FABRICATION D'UN FILTRE À MEMBRANE

(30) Priorität: 20.09.2021 DE 102021124250
(43) Veröffentlichungstag der Anmeldung: 26.06.2024
(73) Patentinhaber: membion GmbH, 52159 Roetgen (DE)
(72) Erfinder: VOLMERING, Dirk, 52070 Aachen (DE); VOSSENKAUL, DR., Klaus, 52074 Aachen (DE)
(74) Vertreter: Bauer Wagner Pellengahr Sroka
(86) Internationale Anmeldenummer: PCT/EP2022/068774
(87) Internationale Veröffentlichungsnummer: WO 2023/041216

(56) Entgegenhaltungen:
- WO-A2-2004/078326
- DE-A1- 102019 115 265
- DE-B3- 102019 129 074
- US-A1- 2004 206 683
- US-A1- 2019 247 772

## Beschreibung

Die Erfindung betrifft zunächst einen Membranfilter für den getauchten Betrieb zum Filtern einer Flüssigkeit mit Membranelementen, die horizontal nebeneinander angeordnet sind und jeweils folgende Merkmale aufweisen:
- in einer vertikalen Längsrichtung angeordnete Membranen zum Filtern eines flüssigen Permeats aus der Flüssigkeit,
- einen auf einer Header-Höhe angeordneten Header mit einem Permeat-Sammelraum, an den die Membranen permeatseitig angeschlossen sind, und einem Permeat-Auslass zum Auslassen des Permeats in einer Auslassrichtung horizontal aus dem Permeat-Sammelraum und
- ein Rohr, das oben an den jeweiligen Header anschließt und die Membranen des jeweiligen Membranelements seitlich umhüllt,
wobei die Permeat-Auslässe an einen horizontal verlaufenden, gemeinsamen Permeat-Sammler angeschlossen sind, der das Permeat aus dem Membranfilter abführt. Die Erfindung betrifft weiterhin ein Verfahren zum Herstellen eines solchen Membranfilters.

Ein solcher Membranfilter und ein solches Verfahren ist aus DE 10 2019 115265 A1 bekannt. Das Rohr hat den Vorteil, dass das zu Spülzwecken der Membranen eingetragene Gas den Bereich der Membranen nicht seitlich verlassen und ungenutzt neben den Membranen aufwärts strömen kann.

Im Hintergrund der Erfindung offenbart DE 10 2019 129074 B3 einen ähnlichen Membranfilter, allerdings ohne die eigentliche Permeatsammlung.

Der aus US 7,037,426 B2 bekannte Membranfilter weist einen oberhalb der Membranelemente verlaufenden Permeat-Sammler auf. Aus den Permeat-Auslässen der unten an den Membranelementen angebrachten Header wird das Permeat durch Rohrleitungen zunächst parallel zu den Membranen nach oben in den oberhalb der Oberfläche der Flüssigkeit zu dieser parallel verlaufenden Permeat-Sammler geführt. Die Permeat-Auslässe werden an die Rohrleitungen nur formschlüssig angesteckt.

Im weiteren Hintergrund der Erfindung offenbart US 2004/0188339 A1 einen Membranfilter, in dem das Permeat vertikal aus dem Permeat-Sammelraum ausgelassen wird.

Die Membranfilter aus WO 2004/078326 A2, US 2004/206683 A1 und US 2019/247772 A1 weisen kein die Membranen seitlich umhüllendes Rohr auf und der Permeatsammler liegt nicht in der Header-Höhe neben den Headern.

### Aufgabe

Der Erfindung liegt die Aufgabe zugrunde, die Herstellung des Membranfilters zu vereinfachen.

### Lösung

Ausgehend von dem bekannten Membranfilter wird nach der Erfindung vorgeschlagen, dass der Permeat-Sammler in der Header-Höhe neben den Headern angeordnet ist.

Vorzugsweise weist ein erfindungsgemäßer Membranfilter Auskragungen und Vertiefungen an den Headern und an dem Permeat-Sammler auf, wobei die Auskragungen in die Vertiefungen hineinragen und die Header in der Längsrichtung an dem Permeat-Sammler fixieren. Dabei gehört es sowohl zum Umfang der Erfindung, dass der Header die Auskragungen und der Permeat-Sammler die Vertiefungen aufweist, als auch umgekehrt, dass der Permeat-Sammler die Auskragungen aufweist und der Permeat-Sammler die Vertiefungen.

Die Fixierung des Headers an dem Permeat-Sammler in der Längsrichtung ist beispielsweise für den Betrieb des Membranfilters in Membranbioreaktoren (MBR) von Bedeutung. Hier wird zur Spülung der Membranen ein Gas, in der Regel Luft zwischen die Membranen von unten eingeblasen. Diese Spülluft wird sogar häufig pulsierend eingetragen, was zu Wechselbelastungen in dem Membranelement in vertikaler Richtung führt. Die vertikale Fixierung der Header an dem Permeat-Sammler in der Längsrichtung trägt daher langfristig in entscheidender Weise zu einem Erhalt der Dichtwirkung in den Anschlüssen der Permeat-Auslässe an den Permeat-Sammler bei.

Es gehört zum Umfang des erfindungsgemäßen Membranfilters, dass die Membranelemente mit verschiedenen Arten von Membranen bestückt sein können, wie z. B. Hohlfasermembranen, Plattenmembranen, Kissenmembranen oder zu Vorhängen verbundenen Hohlfasermembranen. Die Membranen selber gehören dabei bevorzugt zu dem Bereich der Ultra- oder Mikrofiltrationsmembranen mit Porengrößen zwischen 0,02 und 1,0 µm. Es können jedoch auch andere Membranen aus dem Bereich der Nanofiltration oder Niederdruck-Umkehrosmose eingesetzt werden.

Vorzugsweise weist ein erfindungsgemäßer Membranfilter in der Auslassrichtung verlaufende Holme an dem Permeat-Sammler auf, wobei jeweils zwei der Holme einen der Header horizontal quer zu der Auslassrichtung an dem Permeat-Sammler haltern.

Vorzugsweise weist ein solcher erfindungsgemäßer Membranfilter Rastverbindungen zwischen den Holmen und den Headern auf, die die Header in der Auslassrichtung an dem Permeat-Sammler fixieren. Dadurch können die Membranelemente ohne die Verwendung von Werkzeugen in dem Membranfilter montiert werden.

Es gehört zum Umfang der Erfindung, dass der Permeat-Sammler aus einzelnen Elementen, beispielsweise Spritzgussteilen, zusammengesetzt ist. Wobei die Spritzgussteile beispielsweise miteinander verklebt werden. Auch die Holme können dabei als Einzelteile formschlüssig eingeschoben werden, bzw. auch zusätzlich verklebt werden.

Vorzugsweise sind die Membranen oben einzeln verschlossene Hohlfasermembranen. Bei Verwendung von Hohlfasermembranen können diese erfindungsgemäß in double-header Systemen oder single-header Systemen konfiguriert sein. Beides gehört für die Ausgestaltung der Membranelemente ausdrücklich zum Umfang der Erfindung. Bei double-header Systemen werden die Hohlfasermembranen oben und unten in Headern fixiert. Beim single-header-Design schweben die Membranen oben einzeln verschlossen in der zu filtrierenden Flüssigkeit, während sie nur unten in einem Fußelement fixiert sind. Dies hat insbesondere beim Einsatz der Membranfilter in kommunalen Membranbioreaktoren den Vorteil, dass im zu filtrierenden Schlamm enthaltene Haare und faserige Verbindungen frei nach oben von den Membranen abgestreift und aus dem Membranelement herausgespült werden können. Dadurch reduziert sich der Vorbehandlungsaufwand des einströmenden Abwassers,

Vorzugsweise sind in einem erfindungsgemäßen Membranfilter oberhalb der Header-Höhe in mindestens einer weiteren Header-Höhe weitere Header permeatseitig an einen weiteren Permeat-Sammler angeschlossen. Das kann beispielsweise dann der Fall sein, wenn es sich bei den Membranelementen um Double-Header-Systeme handelt, bei denen die Membranen unten und oben in einem Header fixiert sind. In diesem Fall werden die unteren Header jeweils an den Permeat-Sammler und die oberer Header als weiterer Header jeweils an den weiteren Permeat-Sammler oberhalb der Header-Höhe angeschlossen.

Es gehört aber auch zum Umfang der Erfindung, dass die weiteren Header, die oberhalb der Header-Höhe an einen weiteren Permeat-Sammler angeschlossen sind, zu weiteren Membranelementen gehören, die oberhalb der an den Permeat-Sammler angeschlossenen Membranelement montiert sind. Dies ist in sogenannten Double-decker Membranfiltern der Fall, in denen jeweils zwei oder mehrere Membranelemente übereinander in dem Filter installiert sind. Dabei werden die auf einer Ebene montierten Membranelemente jeweils an einen gemeinsamen Permeat-Sammler in dieser Ebene angeschlossen.

Vorzugsweise weist ein erfindungsgemäßer Membranfilter unten an den Headern angebrachte Geysir-Elemente auf mit jeweils einem nach unten offenen Gas-Sammelraum zum Sammeln eines einströmenden Gases und einer Auslasseinrichtung zum pulsweisen Auslassen des Gases in den jeweiligen Header. Das pulsweise Auslassen des Gases führt zu einer deutlich effektiveren Spülwirkung der Membranen und ist zudem noch vergleichsweise energiesparend.

Ausgehend von dem bekannten Verfahren wird nach der Erfindung vorgeschlagen, dass der Permeat-Sammler in der Header-Höhe neben den Headern angeordnet ist. Das erfindungsgemäße Verfahren, mit dem ein erfindungsgemäßer Membranfilter hergestellt werden kann, zeichnet sich gleichermaßen durch dessen vorstehend genannte Vorteile aus.

Vorzugsweise werden in einem erfindungsgemäßen Verfahren die Header nur formschlüssig an dem Permeat-Sammler angeschlossen. Dies hat wiederum den Vorteil, dass für die Montage der Membranelemente im Membranfilter keinerlei Werkzeug benötigt wird.

Vorzugsweise werden in einem erfindungsgemäßen Verfahren Auskragungen und Vertiefungen an den Headern und an dem Permeat-Sammler horizontal ineinander eingeschoben. Die in die Vertiefungen eingeschobenen Auskragungen blockieren eine Verschiebung der jeweiligen Header gegen den Permeat-Sammler und fixieren diese in vertikaler Richtung an dem Permeat-Sammler. Dadurch werden vertikale Kräfte im Membranelement aufgenommen und die Verbindung vom Membranelement zum Permeat-Sammler über die Permeat-Auslässe wird vor einer mechanischen Zerstörung geschützt.

Auch hier gehört es zum Umfang der Erfindung, dass entweder Auskragungen an den Headern in Vertiefungen des Permeat-Sammlers eingeschoben werden oder umgekehrt Vertiefungen des Headers in Auskragungen an dem Permeat-Sammler.

Vorzugsweise werden in einem erfindungsgemäßen Verfahren die Header derart in der Auslassrichtung zwischen je zwei Holme an dem Permeat-Sammler eingeschoben, dass die Holme den jeweiligen Header in horizontaler Richtung quer zu der Längsrichtung fixieren. Dabei werden vorzugsweise zugleich die Auskragungen in die Vertiefungen geführt. Die Holme unterstützen dabei das Einführen des Permeat-Auslasses des Membranelementes in Öffnungen des Permeat-Sammlers.

Vorzugsweise rasten in einem solchen erfindungsgemäßen Verfahren Rastverbindungen zwischen den Holmen und den Headern beim Einschieben ein, und fixieren den jeweiligen Header in der Längsrichtung. Dadurch wird erreicht, dass sich die ineinander geschobene Verbindung von Auskragungen und Vertiefungen im Betrieb nicht lösen kann, d.h. eine sichere Verbindung zwischen Membranelementen und Permeat-Sammler gewährleistet ist.

Vorzugsweise werden in einem erfindungsgemäßen Verfahren die Membranelemente zunächst mit einer oberen Halterung oben in ein Gestell eingehängt und dann wird der jeweilige Header an dem Permeat-Sammler anschlossen. Dadurch wird bei der Montage des Membranelementes in dem Membranfilter die Höhe des Permeat-Auslasses bereits in die Nähe der entsprechenden Öffnung in dem Permeat-Sammler gebracht, wodurch das Einschieben der Auskragungen in die Vertiefungen erleichtert wird.

Vorzugsweise wird in einem erfindungsgemäßen Verfahren unter den Membranelementen unter den Headern zwischen je zwei der Holme an dem Permeat-Sammler Geysir-Elemente angebracht werden mit jeweils einem nach unten offenen Gas-Sammelraum zum Sammeln eines einströmenden Gases und einer Auslasseinrichtung zum pulsweisen Auslassen des Gases in den jeweiligen Header. Dadurch wird die Spülwirkung des eingetragenen Gases, beispielsweise in Membranbioreaktoren deutlich verbessert.

### Ausführungsbeispiele

Die Erfindung wird nachfolgend anhand von Ausführungsbeispielen erläutert. Es zeigen
- Fig. 1a: einen ersten erfindungsgemäßen Membranfilter,
- Fig. 1b: ein Membranelement des ersten Membranfilters,
- Fig. 1c: einen Detailschnitt des Membranelements und
- Fig. 1d: drei Schritte in der Herstellung des ersten Membranfilters,
- Fig. 2a: einen zweiten erfindungsgemäßen Membranfilter,
- Fig. 2b: ein Membranelement des zweiten Membranfilters und
- Fig. 2c: einen Schnitt durch das Membranelement,
- Fig. 3a: einen dritten erfindungsgemäßen Membranfilter,
- Fig. 3b: einen Permeat-Sammler des dritten Membranfilters,
- Fig. 4: einen vierten erfindungsgemäßen Membranfilter,
- Fig. 5a: einen fünften erfindungsgemäßen Membranfilter und
- Fig. 5b: ein Membranelement des fünften Membranfilters sowie
- Fig. 6: einen sechsten erfindungsgemäßen Membranfilter.

Die Figuren sind vereinfachende, insbesondere nicht maßstäbliche Darstellungen zur Erläuterung des der Erfindung zugrundeliegenden Prinzips.

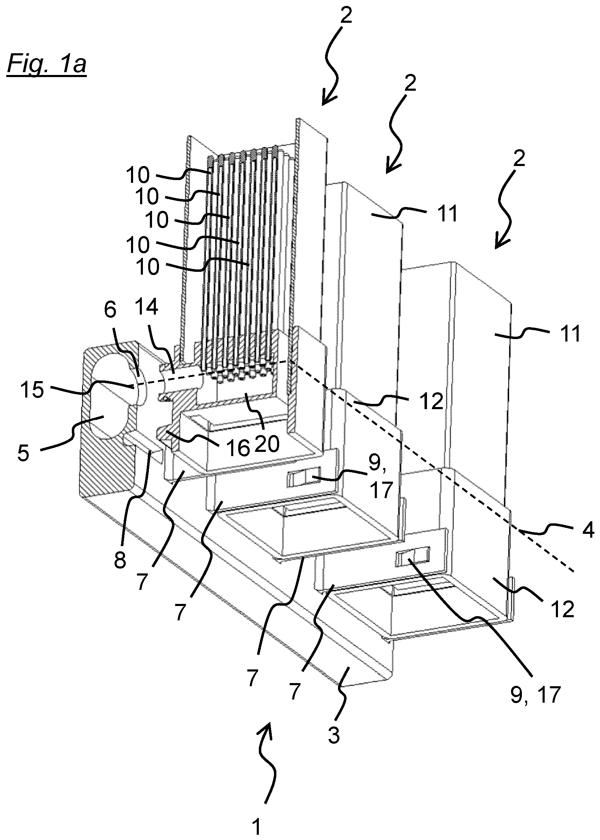

Der in Figur 1a dargestellte erste erfindungsgemäße Membranfilter 1 zum Filtern einer Flüssigkeit weist horizontal nebeneinander angeordnete Membranelemente 2 auf und einen gemeinsamen Permeat-Sammler 3, an den die Membranelemente 2 angeschlossen sind.

Der in der Grundform quaderförmige Permeat-Sammler 3 des ersten Membranfilters 1 weist in der Header-Höhe 4 einen in der Länge durchgehenden, ovalen Kanal 5 auf, sowie kreisförmige Permeat-Öffnungen 6 in den Kanal 5, zwei Holme 7 für jeden Header 12 und eine Vertiefung 8. Die Holme 7 weisen jeweils eine Nut 9 auf.

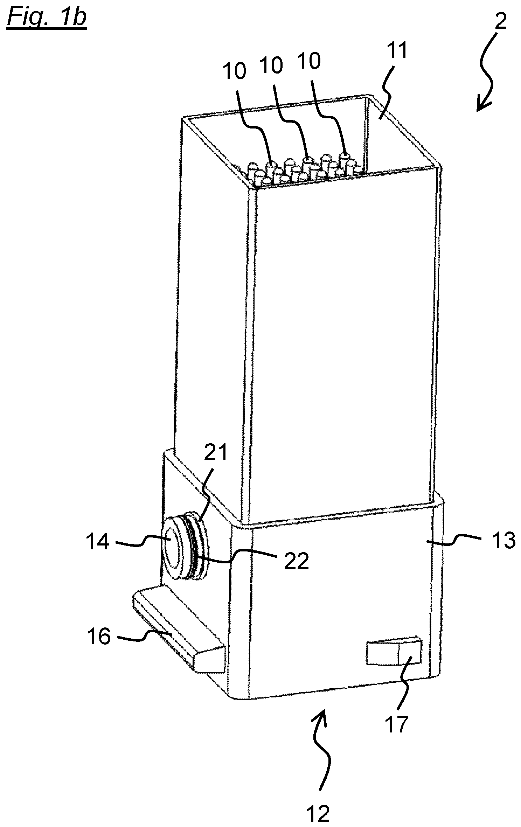

Das in Figur 1b dargestellte Membranelement 2 des ersten Membranfilters 1 weist oben einzeln verschlossene Membranen 10, ein diese seitlich umgebendes Rohr 11 und unten einen Header 12 auf.

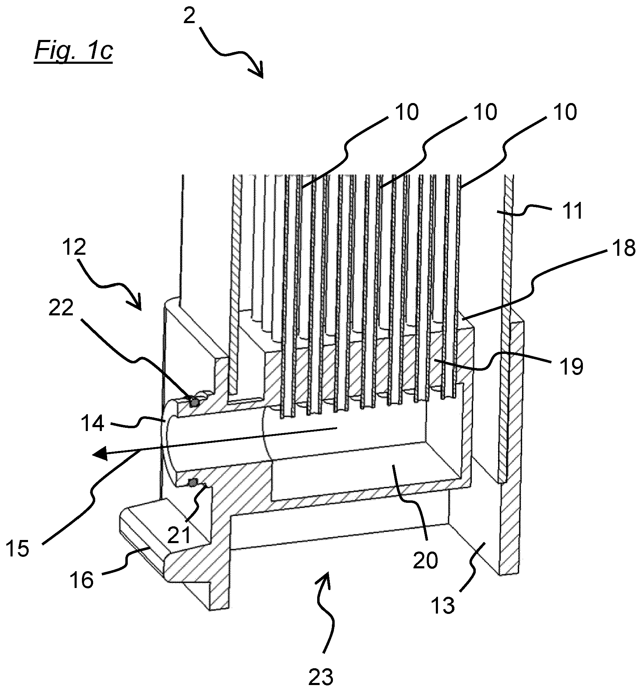

Der in Figur 1c im Schnitt gezeigte Header 12 weist ein im Wesentlichen rohrförmiges Gehäuse 13 und an dem Gehäuse 13 vorn am Membranelement 2 einen Permeat-Auslass 14 zum Auslassen des Permeats horizontal in einer Auslassrichtung 15 in den Permeat-Sammler 3 und eine Auskragung 16, sowie seitlich je einen zu der Vorderseite angeschrägten Nocken 17 auf. Im Innern des Gehäuses 13 weist der Header 12 einen Membranblock 18 auf, in dem die Membranen 10 fixiert sind.

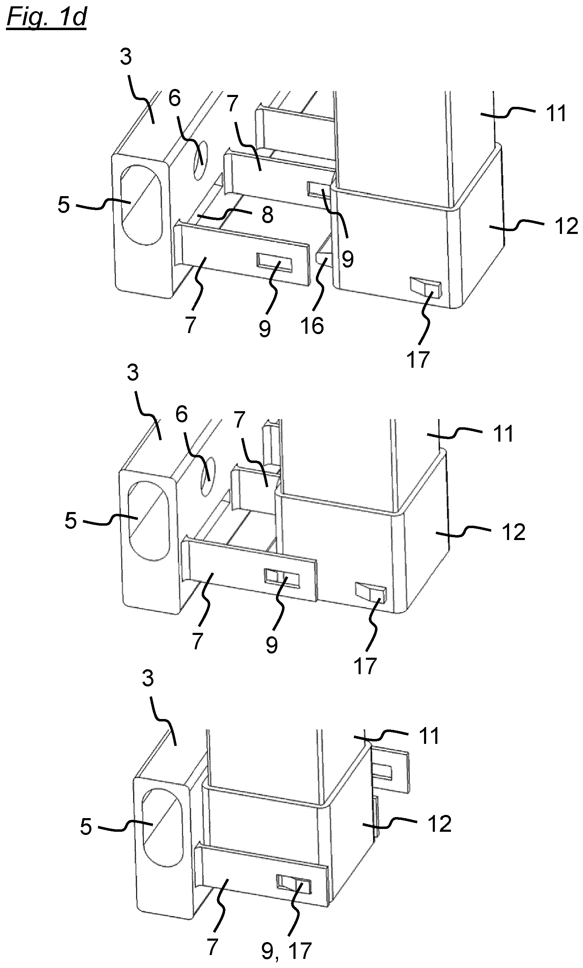

In dem Membranblock 18 durchdringen die Membranen 10 eine Dichtungsschicht 19 und münden in einen Permeat-Sammelraum 20. Der rohrstutzenförmige Permeat-Auslass 14 aus dem Permeatsammelraum weist einen angeformten Kragen 21 und einen Dichtring 22 aus einem Polymer auf. Unterhalb des Membranblocks 18 weist der Header 12 eine Einström-Öffnung 23 auf, durch die die Flüssigkeit und ein nicht dargestelltes Gas zum Spülen der Membranen 10 in das Innere des Membranelements 2 geleitet werden kann. Figur 1d veranschaulicht einen Teilschritt der Montage eines Membranelements 2 im Rahmen der Herstellung des ersten Membranfilters 1 in drei Schritten: Die Holme 7 zentrieren den Header 12 derart an dem Permeat-Sammler 3, dass der Permeat-Auslass 14 in die Permeat-Öffnung 6 und die Auskragung 16 in die Vertiefung 8 geführt werden. In der Endposition dichtet der Dichtring den Permeat-Auslass 14 gegen die Permeat-Öffnung 6 ab, die Auskragung 16 liegt formschlüssig in der Vertiefung 8 und die beiden Nocken 17 des Headers 12 rasten in die Nuten 9 der Holme 7 ein. Die Header 12 und der Permeat-Sammler 3 sind im Spritzgussverfahren aus ABS hergestellt und einheitlich grün (Pantone 2287C) eingefärbt.

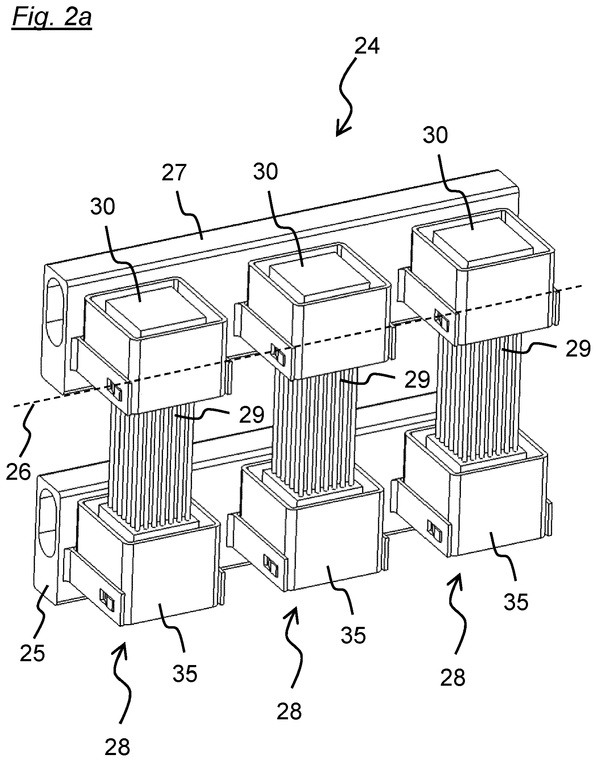

Figur 2a zeigt einen zweiten erfindungsgemäßen Membranfilter 24. Der zweite Membranfilter 24 entspricht im Wesentlichen dem ersten Membranfilter 1, weist aber einen in einem nicht dargestellten Gestell oberhalb des ersten Permeat-Sammlers 25 in einer weiteren Header-Höhe 26 angebrachten weiteren Permeat-Sammler 27 auf.

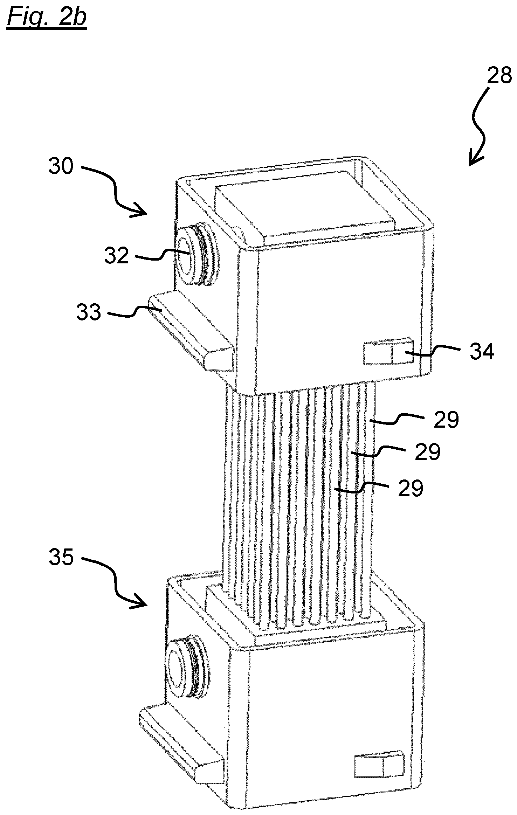

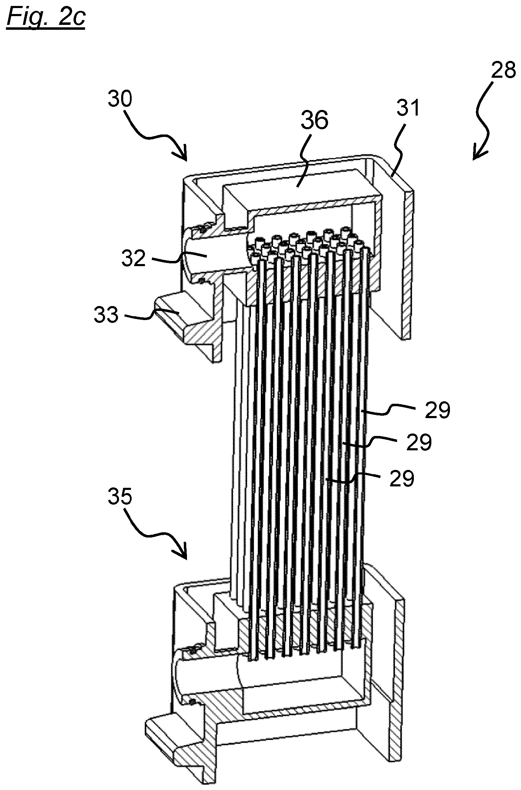

Figur 2b zeigt eine Ansicht eines Membranelementes 28 des zweiten erfindungsgemäßen Membranfilters 24 und Figur 2c einen Schnitt durch das Membranelement 28.

Abweichend von dem ersten erfindungsgemäßen Membranfilter 1 sind die Membranen 29 oben nicht verschlossen, sondern münden in einen weiteren Header 30. Das Gehäuse 31 des weiteren Headers 30 mit Permeat-Auslass 32 und Auskragung 33 vorn und mit den seitlich angebrachten Nocken 34 entspricht dem des unten angebrachten ersten Headers 35.

Der Membranblock 36, in dem die Membranen 29 in dem weiteren Header 30 fixiert sind, ist spiegelbildlich zu dem des ersten Headers 35 angeordnet. Die Permeat-Auslässe 32 der weiteren Header 30 sind durch nicht dargestellte Permeat-Öffnungen mit dem weiteren Permeat-Sammler 27 verbunden. In dem Membranelement 28 des zweiten Membranfilters 24 sind die Membranen 29 zudem nicht von einem Rohr umgeben.

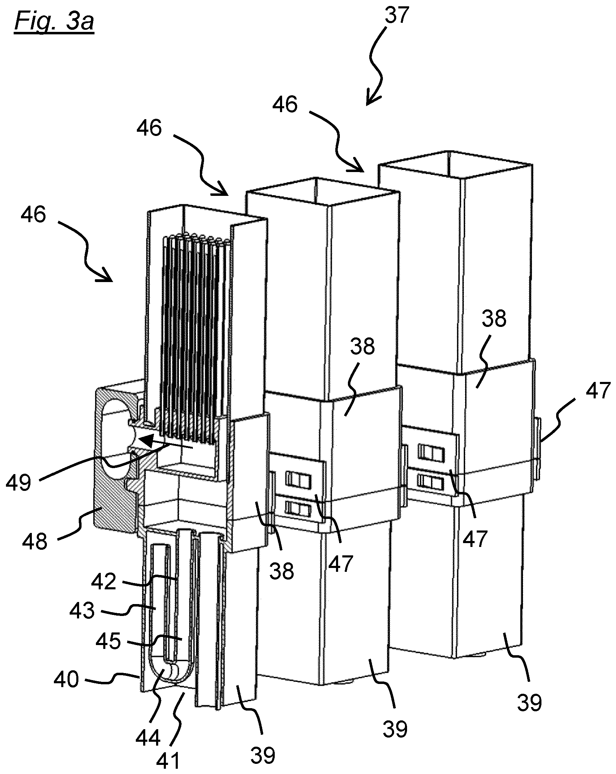

Der in Figur 3a dargestellte dritte erfindungsgemäße Membranfilter 37 entspricht wieder im Wesentlichen dem ersten Membranfilter 1. Abweichend weist der dritte Membranfilter 37 unten an den Headern 38 jeweils ein Geysir-Element 39 auf. Das Geysir-Element 39 weist ein rohrförmiges, im Querschnitt rechteckiges Gehäuse 40 auf, einen nach unten offenen Gas-Sammelraum 41 und eine Auslasseinrichtung 42 zum pulsweisen Auslassen eines nicht dargestellten Gases aus dem Gas-Sammelraum 41.

Die Auslasseinrichtung 42 des Geysir-Elements 39 weist einen Gasheberkanal 43 auf zum Ausströmen des Gases aus dem Gas-Sammelraum 41 nach unten und einen Umlenkungsbereich 44 unten an dem Gasheberkanal 43 zum Umlenken des ausströmenden Gases nach oben. An den Umlenkungsbereich 44 schließt oben ein Ausströmkanal 45 an zum Auslassen des Gases nach oben aus dem Geysir-Element 39 in den Header 38 des Membranelements 46.

Beim Befüllen des Gas-Sammelraums 41 mit dem Gas sinkt ein nicht dargestellter Flüssigkeitspegel in dem Gas-Sammelraum 41, bis dieser den Ausströmkanal 45 unterschreitet. Dann strömt das Gas von oben durch den Gasheberkanal 43 nach unten in den Umlenkungsbereich 44, wird dort nach oben umgelenkt und strömt anschließend so lange aus dem Gas-Sammelraum 41 durch den Ausströmkanal 45 oben aus dem Geysir-Element 39 aus, bis der Gas-Sammelraum 41 und die Auslasseinrichtung 42 wieder von unten mit Flüssigkeit geflutet sind. Dann beginnt der Befüllvorgang mit Gas von neuem. So entsteht aus der kontinuierlichen Gas-Einströmung unten in das Geysir-Element 39 eine pulsierende Gas-Ausströmung oben aus dem Geysir-Element 39 in das Membranelement.

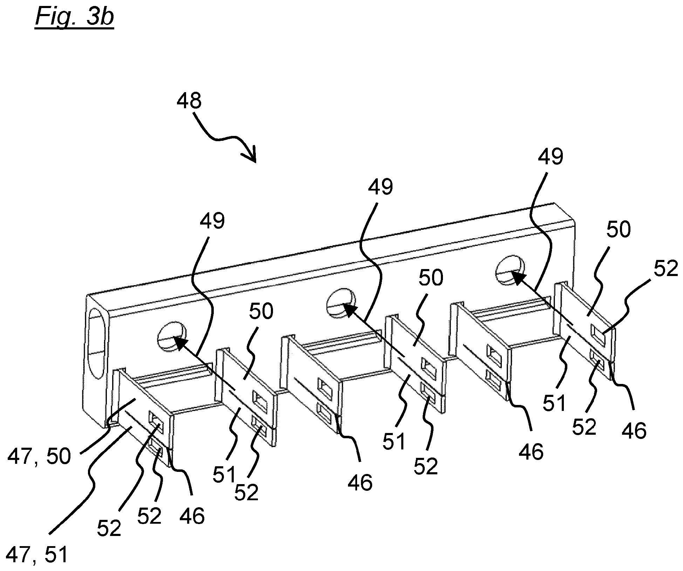

Die Holme 47 des in Figur 3b dargestellten Permeat-Sammlers 48 sind abweichend vom ersten Membranfilter 1 in der Auslassrichtung 49 geteilt und weisen in jedem Teil 50, 51 je eine Nut 52 auf. Die oberen Teile 50 halten die Header 38 und die unteren Teile 50 halten die Geysir-Elemente 39.

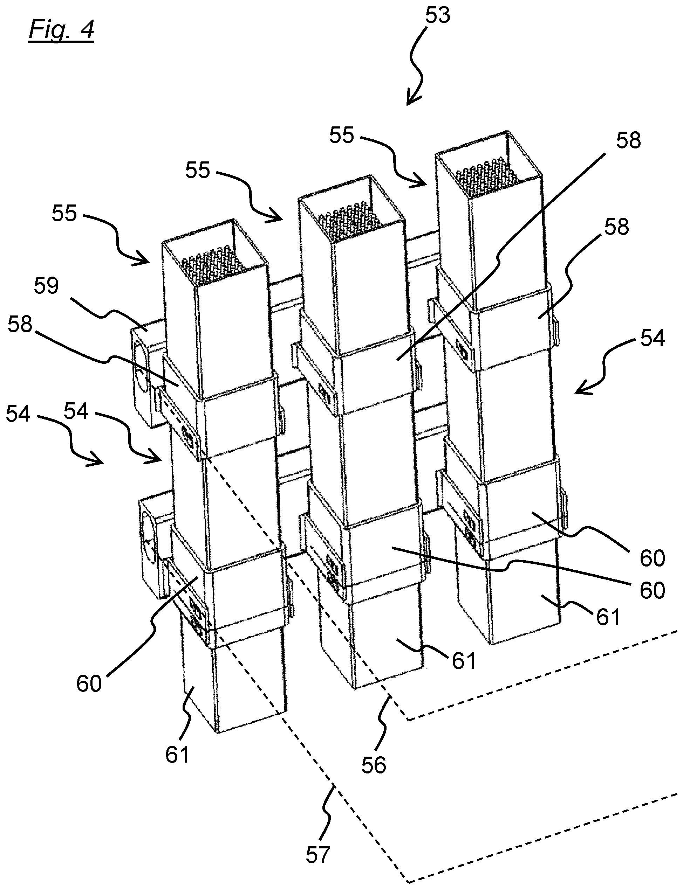

Figur 4 zeigt einen vierten erfindungsgemäßen Membranfilter 53. Der vierte Membranfilter 53 entspricht im Wesentlichen dem dritten Membranfilter 37. Abweichend weist der vierte Membranfilter 53 über den ersten Membranelementen 54 weitere Membranelemente 55 auf. Die weiteren Membranelemente 55 entsprechen den ersten Membranelementen 54. Dabei sind die weiteren Membranelemente 55 in einer weiteren Header-Höhe 56 oberhalb einer Header-Höhe 57 mit weiteren Headern 58 an einen weiteren Permeat-Sammler 59 angeschlossen. Unterhalb von in der Header-Höhe 57 befindlichen Headern 60 sind Geysir-Elemente 61 angeschlossen zum pulsweisen Einlassen eines nicht dargestellten Gases von unten in die Membranelemente 54.

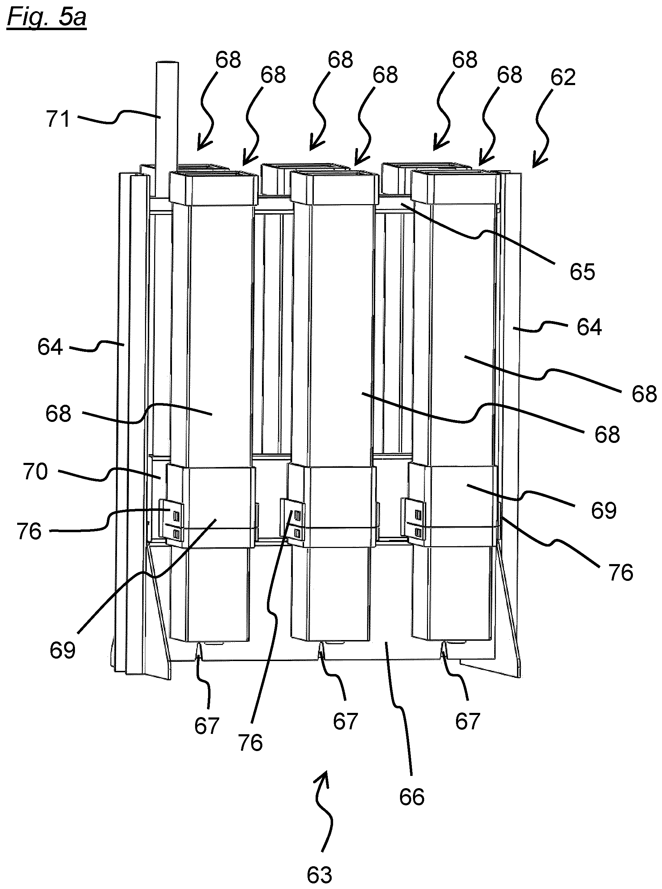

Figur 5a zeigt in einem Gestell 62 einen erfindungsgemäßen fünften Membranfilter 63. Der fünfte Membranfilter 63 entspricht wieder im Wesentlichen dem dritten Membranfilter 37.

Das aus Edelstahlprofilen geschweißte Gestell 62 weist eine rechteckige Grundform mit zwei senkrechten Stützen 64 und einer oberen Querstrebe 65 aus einem U-Profil auf. Eine nach unten offene Wanne 66 aus gekanteten Blechen bildet die untere Querstrebe. Die Wanne 66 weist seitlich nach unten offene keilförmige Gasauslässe 67 auf zum Ausströmen eines Gases aus der Wanne 66 in Membranelemente 68 des fünften Membranfilters 63.

Die Membranelemente 68 sind mit Headern 69 an einen Permeat-Sammler 70 angeschlossen. An diesen ist oben ein Permeat-Auslassrohr 71 angeschlossen zum Auslassen des entstehenden Permeats aus dem Permeat-Sammler 70.

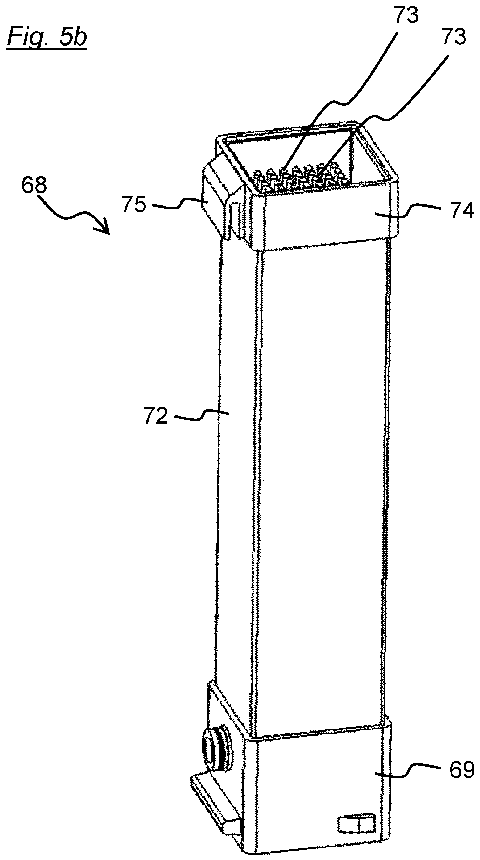

Figur 5b zeigt im Detail das Membranelement 68 des fünften Membranfilters 63. Dieses weist ein Rohr 72 auf, das Membranen 73 des Membranelementes 68 umgibt, und oben einen Abschlussring 74 mit einer hakenförmigen Halterung 75 vorn am Membranelement 68. Die Membranen 73 sind auch in diesem Fall Hohlfasermembranen.

Das vormontierte Membranelement 68 wird zur Montage des fünften Membranfilters 63 mit der Halterung 75 oben an der Querstrebe 65 am gleichfalls vormontierten Gestell 62 eingehängt. Der Header 69 pendelt dann automatisch vor dem Permeat-Sammler 70 und kann dann fast waagrecht mit geringem Kraftaufwand zwischen die Holme 76 geschoben werden.

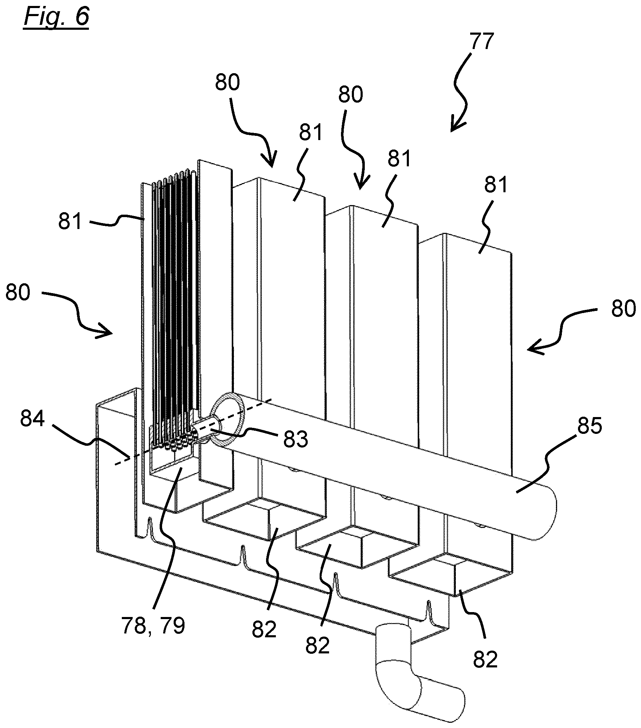

Figur 6 zeigt einen sechsten erfindungsgemäßen Membranfilter 77, der im grundsätzlichen Aufbau wieder dem ersten Membranfilter 1 entspricht. Abweichend von dem ersten Membranfilter 1 bestehen die Header 78 nur aus den Membranblöcken 79 und weisen kein umschließendes Gehäuse auf.

Weiter abweichend sind die Membranelemente 80 von einem gemeinsamen, in der Länge durchgehenden Rohr 81 umschlossen, das unten die Einström-Öffnung 82 für die Flüssigkeit und das Gas aufweist.

Die Permeat-Auslässe 83 an den Headern 78 durchdringen das Rohr 81 und münden in einem neben den Rohren 81 in einer Header-Höhe 84 der Header 78 waagrecht verlaufenden, rohrförmigen Permeat-Sammler 85.

In den Figuren sind
- 1: Membranfilter
- 2: Membranelement
- 3: Permeat-Sammler
- 4: Header-Höhe
- 5: Kanal
- 6: Permeat-Öffnung
- 7: Holm
- 8: Vertiefung
- 9: Nut
- 10: Membran
- 11: Rohr
- 12: Header
- 13: Gehäuse
- 14: Permeat-Auslass
- 15: Auslassrichtung
- 16: Auskragung
- 17: Nocke
- 18: Membranblock
- 19: Dichtungsschicht
- 20: Permeat-Sammelraum
- 21: Kragen
- 22: Dichtring
- 23: Einström-Öffnung
- 24: Membranfilter
- 25: Permeat-Sammler
- 26: (weitere) Header-Höhe
- 27: (weiterer) Permeat-Sammler
- 28: Membranelement
- 29: Membran
- 30: (weiterer) Header
- 31: Gehäuse
- 32: Permeat-Auslass
- 33: Auskragung
- 34: Nocke
- 35: Header
- 36: Membranblock
- 37: Membranfilter
- 38: Header
- 39: Geysir-Element
- 40: Gehäuse
- 41: Gas-Sammelraum
- 42: Auslasseinrichtung
- 43: Gasheberkanal
- 44: Umlenkungsbereich
- 45: Aussströmkanal
- 46: Membranelement
- 47: Holm
- 48: Permeat-Sammler
- 49: Auslassrichtung
- 50: oberes Teil
- 51: unteres Teil
- 52: Nut
- 53: Membranfilter
- 54: Membranelement
- 55: (weiteres) Membranelement
- 56: (weitere) Header-Höhe
- 57: Header-Höhe
- 58: (weiterer) Header
- 59: (weiterer) Permeat-Sammler
- 60: Header
- 61: Geysir-Element
- 62: Gestell
- 63: Membranfilter
- 64: Stütze
- 65: Querstrebe
- 66: Wanne
- 67: Gasauslass
- 68: Membranelement
- 69: Header
- 70: Permeat-Sammler
- 71: Permeat-Auslassrohr
- 72: Rohr
- 73: Hohlfasermembran
- 74: Abschlussring
- 75: Halterung
- 76: Holm
- 77: Membranfilter
- 78: Header
- 79: Membranblock
- 80: Membranelement
- 81: Rohr
- 82: Einström-Öffnung
- 83: Permeat-Auslass
- 84: Header-Höhe
- 85: Permeat-Sammler

## Patentansprüche

1. Membranfilter (1, 37, 53, 63, 77) für den getauchten Betrieb zum Filtern einer Flüssigkeit mit Membranelementen (2, 46, 54, 68, 80), die horizontal nebeneinander angeordnet sind und jeweils folgende Merkmale aufweisen:
• in einer vertikalen Längsrichtung angeordnete Membranen (10, 73) zum Filtern eines flüssigen Permeats aus der Flüssigkeit,
• einen auf einer Header-Höhe (4, 57, 84) angeordneten Header (12, 38, 60, 69, 78) mit einem Permeat-Sammelraum (20), an den die Membranen (10, 73) permeatseitig angeschlossen sind, und einem Permeat-Auslass (14, 83) zum Auslassen des Permeats in einer Auslassrichtung (15, 49) horizontal aus dem Permeat-Sammelraum (20) und
• ein Rohr (11, 72, 81), das oben an den jeweiligen Header (12, 38, 60, 69, 78) anschließt und die Membranen (10, 73) des jeweiligen Membranelementes (2, 46, 54, 68, 80) seitlich umhüllt,
wobei die Permeat-Auslässe (14, 83) an einen horizontal verlaufenden, gemeinsamen Permeat-Sammler (3, 48, 70, 85) angeschlossen sind, der das Permeat aus dem Membranfilter (1, 37, 53, 63, 77) abführt, ***dadurch gekennzeichnet, dass*** der Permeat-Sammler (3, 48, 70, 85) in der Header-Höhe (4, 57, 84) neben den Headern (12, 38, 60, 69, 78) angeordnet ist.

2. Membranfilter (1, 37, 53, 63) nach dem vorgenannten Anspruch, ***gekennzeichnet durch*** Auskragungen (16) und Vertiefungen (8) an den Headern (12, 38, 60, 69, 78) und an dem Permeat-Sammler (3, 48, 70, 85), wobei die Auskragungen (16) in die Vertiefungen (8) hineinragen und die Header (12, 38, 60, 69) in der Längsrichtung an dem Permeat-Sammler (3, 48, 70, 85) fixieren.

3. Membranfilter (1, 37, 53, 63) nach einem der vorgenannten Ansprüche, ***gekennzeichnet durch*** in der Auslassrichtung (15, 49) verlaufende Holme (7, 47, 76) an dem Permeat-Sammler (3, 48, 70, 85), wobei jeweils zwei der Holme (7, 47, 76) einen der Header (12, 38, 60, 69) horizontal quer zu der Auslassrichtung (15, 49) an dem Permeat-Sammler (3, 48, 70, 85) haltern.

4. Membranfilter (1, 37, 53, 63) nach dem vorgenannten Anspruch, ***gekennzeichnet durch*** Rastverbindungen zwischen den Holmen (7, 47, 76) und den Headern (12, 38, 60, 69), die die Header (12, 38, 60, 69) in der Auslassrichtung (15, 49) an dem Permeat-Sammler (3, 48, 70, 85) fixieren.

5. Membranfilter (1, 37, 53, 63, 77) nach einem der vorgenannten Ansprüche, ***dadurch gekennzeichnet, dass*** die Membranen (10, 73) oben einzeln verschlossene Hohlfasermembranen sind.

6. Membranfilter (53) nach einem der vorgenannten Ansprüche, ***dadurch gekennzeichnet, dass*** oberhalb der Header-Höhe (4, 57, 84) in einer weiteren Header-Höhe (56) weitere Header (58) permeatseitig an einen weiteren Permeat-Sammler (59) angeschlossen sind.

7. Membranfilter (37, 53, 63) nach einem der vorgenannten Ansprüche, ***gekennzeichnet durch*** unten an den Headern (38, 60) angebrachte Geysir-Elemente (39, 61) mit jeweils einem nach unten offenen Gas-Sammelraum (41) zum Sammeln eines einströmenden Gases und einer Auslasseinrichtung (42) zum pulsweisen Auslassen des Gases in den jeweiligen Header (38, 69).

8. Verfahren zum Herstellen eines Membranfilters (1, 37, 53, 63, 77) für den getauchten Betrieb zum Filtern einer Flüssigkeit mit Membranelementen (2, 46, 54, 68, 80), die in horizontaler Richtung nebeneinander angeordnet sind und jeweils folgende Merkmale aufweisen:
• in einer vertikalen Längsrichtung angeordnete Membranen (10, 73) zum Filtern eines flüssigen Permeats aus der Flüssigkeit,
• einen auf einer Header-Höhe (4, 57, 84) angeordneten Header (12, 38, 60, 69, 78) mit einem Permeat-Sammelraum (20), an den die Membranen (10, 73) permeatseitig angeschlossen sind, und einem Permeat-Auslass (14, 83) zum Auslassen des Permeats in einer Auslassrichtung (15, 49) quer zu der Längsrichtung aus dem Permeat-Sammelraum (20) und
• ein Rohr (11, 72, 81), das oben an den jeweiligen Header (12, 38, 60, 69, 78) anschließt und die Membranen (10, 73) des jeweiligen Membranelementes (2, 46, 54, 68, 80) seitlich umhüllt,
wobei die Permeat-Auslässe (14, 83) an einen horizontal verlaufenden, gemeinsamen Permeat-Sammler (3, 48, 70, 85) angeschlossen werden, der das Permeat aus dem Membranfilter (1, 37, 53, 63, 77) abführt, ***dadurch gekennzeichnet, dass*** der Permeat-Sammler (3, 48, 70, 85) in der Header-Höhe (4, 57, 84) neben den Headern (12, 38, 60, 69, 78) angeordnet ist.

9. Verfahren nach dem vorgenannten Anspruch, ***dadurch gekennzeichnet, dass*** die Header (12, 38, 60, 68) nur formschlüssig an dem Permeat-Sammler (3, 48, 70) angeschlossen werden.

10. Verfahren nach Anspruch 8 oder 9, ***dadurch gekennzeichnet, dass*** Auskragungen (16) und Vertiefungen (8) an den Headern (12, 38, 60, 69) und an dem Permeat-Sammler (3, 48, 70) horizontal ineinander eingeschoben werden.

11. Verfahren nach dem vorgenannten Anspruch, ***dadurch gekennzeichnet, dass*** die Header (12, 38, 60, 69) in der Auslassrichtung (15, 49) zwischen je zwei Holme (7, 47, 76) an dem Permeat-Sammler (3, 48, 70) eingeschoben und dabei vorzugsweise die Auskragungen (16) in die Vertiefungen (8) geführt werden.

12. Verfahren nach dem vorgenannten Anspruch, ***dadurch gekennzeichnet, dass*** Rastverbindungen zwischen den Holmen (7, 47, 76) und den Headern (12, 38, 60, 69) beim Einschieben einrasten.

13. Verfahren nach einem der Ansprüche 8 bis 12, ***dadurch gekennzeichnet, dass*** die Membranelemente (68) zunächst mit einer oberen Halterung (75) oben in ein Gestell (62) eingehängt werden und dann der jeweilige Header (69) an dem Permeat-Sammler (70) angeschlossen wird.

14. Verfahren nach einem der Ansprüche 8 bis 13, ***dadurch gekennzeichnet, dass*** unter den Headern (38, 60, 69) zwischen je zwei der Holme (7, 47, 76) an dem Permeat-Sammler (48, 70) Geysir-Elemente (39, 61) angebracht werden mit jeweils einem nach unten offenen Gas-Sammelraum (41) zum Sammeln eines einströmenden Gases und einer Auslasseinrichtung (42) zum pulsweisen Auslassen des Gases in den jeweiligen Header (38, 60, 69).

## Claims

1. A membrane filter (1, 37, 53, 63, 77) for submerged operation for filtering a liquid through membrane elements (2, 46, 54, 68, 80) horizontally arranged adjacent to one another and respectively having the following features:
- membranes (10, 73) arranged in a vertical longitudinal direction and configured to filter a liquid permeate from the liquid;
- a header (12, 38, 60, 69, 78) arranged at a header level (4, 57, 84) and including a permeate collection cavity (20), wherein respective permeate sides of the membranes (10, 73) are connected to the permeate collection cavity (20), and a permeate outlet (14, 83) configured to drain the permeate in an outlet direction (15, 49) horizontally from the permeate collection cavity (20); and
- a tube (11, 72, 81) that adjoins on top at a respective header of the headers (12, 38, 60, 69, 78) and laterally envelops the membranes (10, 73) of the respective membrane element (2, 46, 54, 68, 80),
wherein the permeate outlets (14, 83) are connected at a horizontally extending common permeate collector (3, 48, 70, 85) that drains the permeate from the membrane filter (1, 37, 53, 63, 77),
**characterized in that** the permeate collector (3, 48, 70, 85) is arranged at the header level (4, 57, 84) adjacent to the headers (12, 38, 60, 69, 78).

2. The membrane filter (1, 37, 53, 63) according to the preceding claim, **characterized by** protrusions (16) and recesses (8) at the headers (12, 38, 60, 69, 78) and at the permeate collector (3, 48, 70, 85), wherein the protrusions (16) protrude into the recesses (8) and fix the headers (12, 38, 60, 69) in the longitudinal direction at the permeate collector (3, 25, 48, 70, 85).

3. The membrane filter (1, 37, 53, 63) according to one of the preceding claims, **characterized by** bars (7, 47, 76) extending in the outlet direction (15, 49) and arranged at the permeate collector (3, 48, 70, 85), wherein two respective bars of the bars (7, 47, 76) support one of the headers (12, 38, 60, 69) horizontally and transversal to the outlet direction (15, 49) at the permeate collector (3, 48, 70, 85).

4. The membrane filter (1, 37, 53, 63) according to the preceding claim, **characterized by** interlocking connections between the bars (7, 47, 76) and the headers (12, 38, 60, 69), wherein the interlocking connections fix the headers (12, 38, 60, 69) in the outlet direction (15, 49) at the permeate collector (3, 48, 70, 85).

5. The membrane filter (1, 37, 53, 63, 77) according to one of the preceding claims, **characterized in that** the membranes (10, 73) are configured as hollow fiber membranes individually closed on top.

6. The membrane filter (53) according to one of the preceding claims, **characterized by** an additional header level (56) above the header level (4, 57, 84), wherein respective permeate sides of additional headers (58) are connected to an additional permeate collector (59) at the additional header level (56).

7. The membrane filter (37, 53, 63) according to one of the preceding claims, **characterized by** geyser elements (39, 61) arranged at bases of the headers (38, 60) and respectively including a downward open gas collection cavity (41) configured to collect an inflowing gas, and an outlet device (42) configured for pulsating exhaust of the gas into the respective header (38, 69).

8. A method for producing a membrane filter (1, 37, 53, 63, 77) for submerged operation for filtering a liquid through membrane elements (2, 46, 54, 68, 80) horizontally arranged adjacent to one another and respectively having the following features:
- membranes (10, 73) arranged in a vertical longitudinal direction and configured to filter a liquid permeate from the liquid;
- a header (12, 38, 60, 69, 78) arranged at a header level (4, 57, 84) and including a permeate collection cavity (20), wherein respective permeate sides of the membranes (10, 73) are connected to the permeate collection cavity (20), and a permeate outlet (14, 83) configured to drain the permeate in an outlet direction (15, 49) transversal to the longitudinal direction from the permeate collection cavity (20); and
- a tube (11, 72, 81) that adjoins on top at a respective header of the headers (12, 38, 60, 69, 78) and laterally envelops the membranes (10, 73) of the respective membrane element (2, 46, 54, 68, 80),
wherein the permeate outlets (14, 83) are connected at a horizontally extending common permeate collector (3, 48, 70, 85) that drains the permeate from the membrane filter (1, 37, 53, 63, 77),
**characterized in that** the permeate collector (3, 48, 70, 85) is arranged at the header level (4, 57, 84) adjacent to the headers (12, 38, 60, 69, 78).

9. The method according to the preceding claim, **characterized in that** the headers (12, 38, 60, 68) are connected at the permeate collector (3, 48, 70) exclusively by form locking.

10. The method according to claim 8 or 9, **characterized in that** the protrusions (16) and the recesses (8) at the headers (12, 38, 60, 69) and at the permeate collector (3, 48, 70) are inserted into one another horizontally.

11. The method according to the preceding claim, **characterized in that** the headers (12, 38, 60, 69) are inserted at the permeate collector (3, 48, 70) in the outlet direction (15, 49) between two respective bars (7, 47, 76), and thus the protrusions (16) are advantageously inserted into the recesses (8).

12. The method according to the preceding claim, **characterized in that** interlocking connections between the bars (7, 47, 76) and the headers (12, 38, 60, 69) interlock upon insertion.

13. The method according to one of the claims 8 - 12, **characterized in that** the membrane elements (68) are initially inserted with an upper support (75) into a top of a frame (62) and the respective header (69) is connected at the permeate collector (70) thereafter.

14. The method according to one of the claims 8 - 13, **characterized in that** geyser elements (39, 61) are arranged at the permeate collector (48, 70) below the headers (38, 60, 69) between two respective bars (7, 47, 76) wherein the geyser elements respectively include a downward open gas collection cavity (41) configured to collect an inflowing gas and an outlet device (42) configured for pulsating exhausting of the gas into the respective header (38, 60, 69).

## Revendications

1. Filtre à membrane (1, 37, 53, 63, 77) pour le fonctionnement immergé destiné au filtrage d'un liquide avec des éléments de membrane (2, 46, 54, 68, 80), qui sont disposés horizontalement les uns à côté des autres et comportent respectivement les caractéristiques suivantes :
• membranes (10, 73) disposées dans une direction longitudinale verticale pour filtrer un perméat liquide à partir du liquide,
• un collecteur (12, 38, 60, 69, 78) disposé à une hauteur de collecteur (4, 57, 84) avec un compartiment collecteur de perméat (20), auquel sont raccordées côté perméat les membranes (10, 73), et une sortie de perméat (14, 83) pour évacuer le perméat dans une direction de sortie (15, 49) horizontalement du compartiment collecteur de perméat (20), et
• un conduit (11, 72, 81), qui se raccorde en haut au collecteur respectif (12, 38, 60, 69, 78) et enveloppe latéralement les membranes (10, 73) de l'élément de membrane respectif (2, 46, 54, 68, 80),
sachant que les sorties de perméat (14, 83) sont raccordées à un collecteur de perméat (3, 48, 70, 85) commun passant horizontalement, qui évacue le perméat du filtre à membrane (1, 37, 53, 63,77), ***caractérisé en ce que*** le collecteur de perméat (3, 48, 70, 85) est disposé à la hauteur de collecteur (4, 57, 84) près des collecteurs (12, 38, 60, 69, 78).

2. Filtre à membrane (1, 37, 53, 63) selon la revendication précédente, ***caractérisé par*** des saillies (16) et des cavités (8) sur les collecteurs (12, 38, 60, 69, 78) et sur le collecteur de perméat (3, 48, 70, 85), sachant que les saillies (16) pénètrent dans les cavités (8) et fixent les collecteurs (12, 38, 60, 69) en direction longitudinale sur le collecteur de perméat (3, 48, 70, 85).

3. Filtre à membrane (1, 37, 53, 63) selon l'une quelconque des revendications précédentes, ***caractérisé par*** des longerons (7, 47, 76) passant en direction de sortie (15, 49) sur le collecteur de perméat (3, 48, 70, 85), sachant que deux des longerons (7, 47, 76) supportent respectivement un des collecteurs (12, 38, 60, 69) horizontalement en diagonale par rapport à la direction de sortie (15, 49) sur le collecteur de perméat (3, 48, 70, 85).

4. Filtre à membrane (1, 37, 53, 63) selon la revendication précédente, ***caractérisé par*** des liaisons d'encliquetage entre les longerons (7, 47, 76) et les collecteurs (12, 38, 60, 69), qui fixent les collecteurs (12, 38, 60, 69) dans la direction de sortie (15, 49) au collecteur de perméat (3, 48, 70, 85).

5. Filtre à membrane (1, 37, 53, 63, 77) selon l'une quelconque des revendications précédentes, ***caractérisé* en ce que** les membranes (10, 73) sont des membranes creuses à base de fibres fermées individuellement en haut.

6. Filtre à membrane (53) selon l'une quelconque des revendications précédentes, ***caractérisé en ce que*** d'autres collecteurs (58) sont raccordés côté perméat à un autre collecteur de perméat (59) au-dessus de la hauteur de collecteur (4, 57, 84) à une autre hauteur de collecteur (56).

7. Filtre à membrane (37, 53, 63) selon l'une quelconque des revendications précédentes, ***caractérisé par*** des éléments geysers (39, 61) placés en dessous sur les collecteurs (38, 60) avec respectivement un compartiment collecteur de gaz ouvert en bas (41) pour collecter un gaz affluent et un système de sortie (42) pour évacuer de façon pulsée le gaz dans le collecteur respectif (38, 69).

8. Procédé de fabrication d'un filtre à membrane (1, 37, 53, 63, 77) pour le fonctionnement immergé destiné au filtrage d'un liquide avec des éléments de membrane (2, 46, 54, 68, 80), qui sont disposés dans la direction horizontale les uns à côté des autres et comportent respectivement les caractéristiques suivantes :
• membranes (10, 73) disposées dans une direction longitudinale verticale pour filtrer un perméat liquide à partir du liquide,
• un collecteur (12, 38, 60, 69, 78) disposé à une hauteur de collecteur (4, 57, 84) avec un compartiment collecteur de perméat (20), auquel sont raccordées côté perméat les membranes (10, 73), et une sortie de perméat (14, 83) pour évacuer le perméat dans une direction de sortie (15, 49), en diagonale par rapport à la direction longitudinale, du compartiment collecteur de perméat (20), et
• un conduit (11, 72, 81), qui se raccorde en haut au collecteur respectif (12, 38, 60, 69, 78) et enveloppe latéralement les membranes (10, 73) de l'élément de membrane respectif (2, 46, 54, 68, 80),
sachant que les sorties de perméat (14, 83) sont raccordées à un collecteur de perméat (3, 48, 70, 85) commun passant horizontalement, qui évacue le perméat du filtre à membrane (1, 37, 53, 63, 77), ***caractérisé* en ce que** le collecteur de perméat (3, 48, 70, 85) est disposé à la hauteur de collecteur (4, 57, 84) près des collecteurs (12, 38, 60, 69, 78).

9. Procédé selon la revendication précédente, ***caractérisé* en ce que** les collecteurs (12, 38, 60, 68) sont raccordés uniquement par conformité de forme au collecteur de perméat (3, 48, 70).

10. Procédé selon la revendication 8 ou 9, ***caractérisé* en *ce que*** les saillies (16) et les cavités (8) sur les collecteurs (12, 38, 60, 69) et sur le collecteur de perméat (3, 48, 70) sont glissées horizontalement l'une dans l'autre.

11. Procédé selon la revendication précédente, ***caractérisé* en ce que** les collecteurs (12, 38, 60, 69) sont insérés dans la direction de sortie (15, 49) entre respectivement deux longerons (7, 47, 76) sur le collecteur de perméat (3, 48, 70) et les saillies (16) sont à cet effet de préférence guidées dans les cavités (8).

12. Procédé selon la revendication précédente, ***caractérisé en ce que*** les liaisons d'encliquetage entre les longerons (7, 47, 76) et les collecteurs (12, 38, 60, 69) s'enclenchent lors de l'insertion.

13. Procédé selon l'une quelconque des revendications 8 à 12, ***caractérisé en ce que*** les éléments de membrane (68) sont d'abord accrochés en haut dans un châssis (62) avec une fixation supérieure (75) et le collecteur respectif (69) est ensuite raccordé au collecteur de perméat (70).

14. Procédé selon l'une quelconque des revendications 8 à 13, ***caractérisé en ce que*** sous les collecteurs (38, 60, 69) entre respectivement deux longerons (7, 47, 76) sont placés sur le collecteur de perméat (48, 70) des éléments geysers (39, 61) avec respectivement un compartiment collecteur de gaz ouvert en bas (41) pour collecter un gaz affluent et un système de sortie (42) pour évacuer de façon pulsée le gaz dans le collecteur respectif (38, 60, 69).
